# EUROPEAN PATENT APPLICATION

(11) **EP 4 741 030 A1**
(43) Date of publication of application: **13.05.2026**
(21) Application number: 25213764.1
(22) Date of filing: 05.11.2025
(51) Int. Cl.: B01B 1/00, B01D 1/00, B01D 9/00, B01D 9/02, B01D 11/02, B01D 21/00, B01J 3/00, B01J 8/00, B09B 3/45, C01B 7/03, C01F 5/10, C01F 5/14, C01F 11/18, C02F 1/02, C02F 1/04, C02F 1/38, C02F 1/52, C02F 1/66, C02F 5/00, C02F 5/02

(54) **METHOD OF SEPARATING MIXED MAGNESIUM AND LITHIUM SALTS**

(30) Priority: 12.11.2024 US 202418944485
(71) Applicant: Energy and Environmental Research Center Foundation, Grand Forks, ND 58202-9017 (US)
(72) Inventor: MARTIN, Christopher Lee, Grand Forks, 58201 (US); MUSICH, Mark, Grand Forks, 58202 (US)
(74) Representative: Forresters IP LLP

(57) **Abstract**

A method of separating lithium and magnesium includes hydrolyzing a hydrolysis composition that includes MgCl₂ and LiCl, the hydrolyzing including treating the hydrolysis composition with heat to form HCl, water, and a hydrolyzed mixture including LiCl and MgO. The method also includes performing dissolution separation including separating a solvent-soluble fraction in the hydrolyzed mixture that includes LiCl from a substantially solvent-insoluble fraction in the hydrolyzed mixture including a magnesium-containing product including Mg(OH)₂ and/or MgO.

## Description

### CROSS-REFERENCE TO RELATED APPLICATIONS

This application is a continuation-in-part of and claims the benefit of priority under 35 U.S.C. § 120 to U.S. Utility Application 18/522,842 filed November 29, 2023, which is a continuation-in-part of and claims the benefit of priority under 35 U.S.C. § 120 to U.S. Utility Application 18/515,726 filed November 21, 2023, which is a continuation of and claims the benefit of priority under 35 U.S.C. § 120 to U.S. Utility Application 18/170,392 filed February 16, 2023, which is a continuation-in-part of and claims the benefit of priority under 35 U.S.C. § 120 to U.S. Utility Application 17/651,520 filed February 17, 2022, which claims the benefit under 35 U.S.C. § 119(e) to U.S. Provisional Patent Application Serial No. 63/200,390 filed March 4, 2021, the disclosures of which are incorporated herein in their entirety by reference.

### BACKGROUND

The separation of lithium (Li) and magnesium (Mg) is a significant challenge. For example, brines including lithium and magnesium salts are often encountered as the water fraction of produced fluids during oil and gas extraction, or extracted from geologic reservoirs for valuable dissolved minerals, and generally contain a complex mixture of chloride salts. Cations in these brines can include sodium (Na), potassium (K), calcium (Ca), magnesium (Mg), and lithium (Li).

While effective methods exist for separating lithium from cations such as Na, K, and Ca, high concentrations of Mg present difficulties due to the similar ionic radii of Li and Mg. This similarity complicates separation using precipitation-based approaches or direct Li extraction techniques. Typically, Mg is precipitated as Mg(OH)₂, forming a sludge that can trap a significant portion of the Li-containing brine.

The challenges associated with elevated Mg content in brines have historically impeded the economical recovery of lithium. This has left many brine resources undeveloped worldwide. Addressing these challenges is crucial for expanding the range of brine compositions considered viable for lithium recovery and for processing existing waste streams from prior extraction activities.

### SUMMARY OF THE INVENTION

Various aspects of the present invention provide a method of separating lithium and magnesium salts. The method includes hydrolyzing a hydrolysis composition that includes MgCl₂ and LiCl, the hydrolyzing including treating the hydrolysis composition with heat and water (which can already be present in the hydrolysis composition, or can be added if the hydrolysis composition is substantially dry) to form HCl, water (e.g., in the form of steam), and a hydrolyzed mixture including LiCl and MgO. The method also includes performing dissolution separation including separating a solvent-soluble fraction in the hydrolyzed mixture that includes LiCl from a substantially solvent-insoluble fraction in the hydrolyzed mixture including a magnesium-containing product including Mg(OH)₂ and/or MgO.

Various aspects of the present invention provide a method of separating lithium and magnesium salts. The method includes softening the brine composition, the brine composition including MgCl₂ and LiCl, the softening including treating the brine composition with a softening reagent to form a softened brine composition and one or more softening precipitates. The method includes partially evaporating the softened brine composition to form an evaporated softened brine, water, and one or more evaporation precipitates. The method includes hydrolyzing the evaporated softened brine, the hydrolyzing including treating the evaporated softened brine with heat to form HCl, water, and hydrolyzed brine including LiCl and MgO. The method also includes performing dissolution separation including separating a solvent-soluble fraction in the hydrolyzed brine that includes LiCl from a substantially water-insoluble fraction in the hydrolyzed brine including a magnesium-containing product including Mg(OH)₂ and/or MgO.

Various aspects of the present invention have advantages over other methods of separating magnesium and lithium salts. For example, in various aspects, the method of the present invention allows for effective separation of lithium from magnesium in concentrated geologic brines, overcoming challenges posed by their similar ionic radii. In various aspects, the method of the present invention more effectively and/or more efficiently separates lithium from magnesium as compared to other methods. In various aspects, the method of the present invention produces magnesium hydroxide having a higher density than formed in other processes, facilitating easier separation from the lithium-containing fraction and thereby facilitating improved separation efficiency. In various aspects, the hydrochloric acid produced by the method of the present invention is a valuable product that can be used or sold to offset or recover the costs and time expense of performing the method.

In various aspects, by addressing the difficulties associated with high magnesium content, the method of the present invention expands the range of brine compositions considered economical for lithium recovery. In various aspects, the method of the present invention can be applied to undeveloped brine resources and existing waste streams, increasing or maximizing the use of available materials/resources. In various aspects, the method of the present invention can contribute to reduced environmental impact by enabling the processing of lithium-containing solid and/or liquid waste streams. In various aspects, the method of the present invention can reduce or minimize water usage due to the significant solubility different between lithium chloride and magnesium hydroxide, with potential water recovery from pretreatment steps.

### BRIEF DESCRIPTION OF THE FIGURES

The drawings illustrate generally, by way of example, but not by way of limitation, various aspects of the present invention.

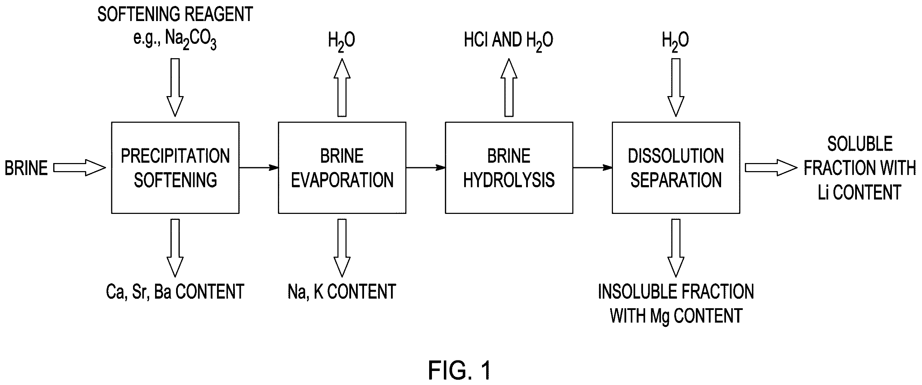

FIG. 1 illustrates a processing scheme for extracting LiCl from a brine source including MgCl₂ and LiCl, in accordance with various aspects.

### DETAILED DESCRIPTION OF THE INVENTION

Reference will now be made in detail to certain aspects of the disclosed subject matter. While the disclosed subject matter will be described in conjunction with the enumerated claims, it will be understood that the exemplified subject matter is not intended to limit the claims to the disclosed subject matter.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" or "at least one of A or B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in a specific order as recited herein. Alternatively, in any aspect(s) disclosed herein, specific acts may be carried out in any order without departing from the principles of the invention, except when a temporal or operational sequence is explicitly recited. Furthermore, specified acts can be carried out concurrently unless explicit claim language recites that they be carried out separately or the plain meaning of the claims would require it. For example, a claimed act of doing X and a claimed act of doing Y can be conducted simultaneously within a single operation, and the resulting process will fall within the literal scope of the claimed process.

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. The term "substantially free of" as used herein can mean having none or having a trivial amount of, such that the amount of material present does not affect the material properties of the composition including the material, such that about 0 wt% to about 5 wt% of the composition is the material, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

### Method of separating lithium and magnesium salts.

Effective methods are available for separating Li from most cations, including Na, K, and Ca, in geologic brine, but high concentrations of Mg present a challenge using a precipitation-based approach or direct Li extraction techniques. With precipitation-based separation, Mg is typically precipitated as Mg(OH)₂ that forms a liquid-retaining sludge, which can trap a significant portion of the Li-containing brine. Additionally, the selectivity of direct Li extraction techniques is challenged when separating Li and Mg because of the similar ionic radii for their dissolved ion forms.

Various aspects of the present invention are based on hydrolyzing mixed chloride salts from concentrated geologic brines to separate Mg and Li constituents. During hydrolysis, certain metal chloride salts can be thermochemically split to release HCl vapor and produce a metal hydroxide compound. Metal chloride salts undergo varying degrees of hydrolysis ranging from negligible, as is the case for Li, to virtually complete, as is the case for Mg. Various aspects of the present invention use hydrolysis treatment of mixed brine salts to convert Mg to insoluble Mg(OH)₂ while leaving Li unaltered and highly soluble; separation is then achieved by dissolving the hydrolysis products in water or another suitable solvent.

Various aspects of the present invention do not require excessive water consumption given the significant solubility difference between the expected hydrolysis products of LiCl and Mg(OH)₂. Furthermore, the needed water could likely be recovered from an earlier pretreatment step. Compared to the conventional process of hydroxide-based precipitation softening that also converts Mg to insoluble Mg(OH)₂, the Mg(OH)₂ produced during hydrolysis in aspects of the present invention will have a higher density than the Mg(OH)₂ particles that make up softening sludge and will be easier to separate from the Li-containing soluble fraction.

The present invention provides a method of separating lithium and magnesium salts. The method can include hydrolyzing a hydrolysis composition that includes MgCl₂ and LiCl. The hydrolyzing can include treating the hydrolysis composition with heat and water (which may already be present in the hydrolysis composition) to form HCl, water (e.g., in the form of steam), and a hydrolyzed mixture including LiCl and MgO. The method can also include performing dissolution separation including separating a solvent-soluble fraction from the hydrolyzed mixture that includes LiCl from a substantially solvent-insoluble fraction including a magnesium-containing product from the hydrolyzed mixture including Mg(OH)₂ and/or MgO. In various aspects, the hydrolysis composition is a brine and the hydrolyzed mixture is a hydrolyzed brine.

A molar ratio of magnesium to lithium in the hydrolysis composition can be 1:1000 to 1000:1, or 1:10 to 10:1, or less than or equal to 1:1000 and greater than or equal to 1000:1 and less than, equal to, or greater than 750:1, 500:1, 400:1, 300:1, 200:1, 100:1, 80:1, 60:1, 40:1, 20:1, 15:1, 10:1, 9:1, 8:1, 7:1, 6:1, 5:1, 4:1, 3:1, 2:1, 1:1, 1:2, 1:3, 1:4, 1:5, 1:6, 1:7, 1:8, 1:9, 1:10, 1:15, 1:20, 1:40, 1:60, 1:80, 1:100, 1:200, 1:300, 1:400, 1:500, or 1:750. A molar ratio of MgCl₂ to LiCl in the hydrolysis composition can be 1:1000 to 1000:1, or 1:10 to 10:1, or less than or equal to 1:1000 and greater than or equal to 1000:1 and less than, equal to, or greater than 750:1, 500:1, 400:1, 300:1, 200:1, 100:1, 80:1, 60:1, 40:1, 20:1, 15:1, 10:1, 9:1, 8:1, 7:1, 6:1, 5:1, 4:1, 3:1, 2:1, 1:1, 1:2, 1:3, 1:4, 1:5, 1:6, 1:7, 1:8, 1:9, 1:10, 1:15, 1:20, 1:40, 1:60, 1:80, 1:100, 1:200, 1:300, 1:400, 1:500, or 1:750. The MgCl₂ and LiCl can together form any suitable proportion of the total amount of metal chloride salts in the hydrolysis composition, such as 1 wt% to 100 wt%, or 50 wt% to 100 wt%, or less than or equal to 100 wt% and greater than or equal to 1 wt% and less than, equal to, or greater than 2 wt%, 3, 4, 5, 10, 15, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.9 wt%.

The hydrolysis composition can be 0 wt% to 99 wt% water, or 5 wt% to 90 wt% water, or less than or equal to 99 wt% and greater than or equal to 0 wt% and less than, equal to, or greater than 1%, 2, 3, 4, 5, 6, 8, 10, 12, 14, 16, 18, 20, 25, 30, 35, 40, 45, 50, 55, 60, 65, 70, 75, 80, 85, 90, or 95% water. The hydrolysis composition can be substantially dry and can be 0 wt% to 5 wt% water, or less than or equal to 5 wt% and greater than or equal to 0 wt% and less than, equal to, or greater than 0.5 wt%, 1, 1.5, 2, 2.5, 3, 3.5, 4, or 4.5 wt% water.

In various aspects, the method can include adding steam during the hydrolysis, such as if the hydrolysis composition is substantially dry. In some aspects, the method can include adding steam during the hydrolysis even if the hydrolysis composition is not substantially dry (e.g., even if the hydrolysis composition has 5 wt% or more water). In some aspects, the method can be free of adding steam during the hydrolysis, such as if the hydrolysis composition is 5 wt% or more water. Steam can be generated from water in the hydrolysis composition during the hydrolysis via the application of heat. The hydrolysis composition can include water that forms the steam. The method can further include recovering the HCl produced during the hydrolysis as a product of the method.

The hydrolysis of the hydrolysis composition that includes MgCl₂ and LiCl can be performed under any suitable conditions. The hydrolysis can include heating the hydrolysis composition to a temperature of 250 °C to 650 °C, or 450 °C to 550 °C, or less than or equal to 650 °C and greater than or equal to 250 °C and less than, equal to, or greater than 260 °C, 280, 300, 320, 340, 360, 380, 400, 420, 440, 450, 460, 470, 480, 490, 500, 510, 520, 530, 540, 550, 560, 580, 600, 620, or 640 °C. The hydrolysis can include maintaining a pressure of the hydrolysis composition of 0.05 MPa to 10 MPa, or 0.1 MPa to 0.5 MPa, or less than or equal to 10 MPa and greater than or equal to 0.05 MPa and less than, equal to, or greater than 0.1 MPa, 0.2, 0.3, 0.4, 0.5, 0.6, 0.8, 1, 1.5, 2, 3, 4, 5, 6, 7, 8, or 9 MPa. The method can include performing the hydrolysis continuously or for a duration of 1 second to 5 hours, or 5 minutes to 1 hour, or less than or equal to 5 hours and greater than or equal to 1 second and less than, equal to, or greater than 2 seconds, 5, 10, 15, 20, 25, 30, 35, 40, 45, 50, 55 seconds, 1 minute, 2, 3, 4, 5, 6, 8, 10, 15, 20, 25, 30, 35, 40, 45, 50, 55 minutes, 1 hour, 2, 3, or 4 hours.

The magnesium-containing product in the substantially solvent-insoluble fraction from the hydrolyzed mixture can include Mg(OH)₂, or MgO, or a combination of Mg(OH)₂ and MgO. The magnesium-containing product can include predominantly MgO. The magnesium-containing product can include MgO and can be substantially free of Mg(OH)₂. The magnesium-containing product can have a weight ratio of the MgO to the Mg(OH)₂ of 0.1:1 to 1:0, or 1:1 to 1000:1, or less than or equal to 1:0 and greater than or equal to 0.1:1 and less than, equal to, or greater than 1000:1, 750:1, 500:1, 400:1, 300:1, 200:1, 100:1, 80:1, 60:1, 40:1, 20:1, 15:1, 10:1, 9:1, 8:1, 7:1, 6:1, 5:1, 4:1, 3:1, 2:1, 1:1, 0.8:1, 0.6:1, 0.5:1, 0.4:1, 0.3:1, or 0.2:1. The Mg in the magnesium-containing product in the solvent-insoluble fraction can be 50 wt% to 100 wt% of the Mg in the MgCl₂ present in the hydrolysis composition, or 80 wt% to 100 wt%, or less than or equal to 100 wt% and greater than or equal to 50 wt% and less than, equal to, or greater than 55 wt%, 60, 65, 70, 75, 80, 82, 84, 86, 88, 90, 91, 92, 93, 94, 95, 96, 97, 98, 99, 99.5, or 99.9 wt% of the Mg in the MgCl₂ present in the hydrolysis composition. Lithium salts can be 0 wt% to 5 wt% of a total amount of salts present in the solvent-insoluble fraction, or 0 wt% to 0.01 wt%, or less than or equal to 5 wt% and greater than or equal to 0 wt% and less than, equal to, or greater than 0.001 wt%, 0.01, 0.1, 0.5, 1, 1.5, 2, 2.5, 3, 3.5, 4, or 4.5 wt% of a total amount of salts present in the solvent-insoluble fraction. The magnesium-containing product can be 5 wt% to 100 wt% of the total amount of salts present in the solvent-insoluble fraction, or equal to or less than 100 wt% and greater than or equal to 5 wt% and less than, equal to, or greater than 10 wt%, 15, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.9 wt%. The method can further include recovering the magnesium-containing product from the solvent-insoluble fraction as a product.

The LiCl in the solvent-soluble fraction from the hydrolyzed mixture can be 50 wt% to 100 wt% of the LiCl present in the hydrolysis composition, or 80 wt% to 100 wt%, or less than or equal to 100 wt% and greater than or equal to 50 wt% and less than, equal to, or greater than 55 wt%, 60, 65, 70, 75, 80, 82, 84, 86, 88, 90, 91, 92, 93, 94, 95, 96, 97, 98, 99, 99.5, or 99.9 wt%. The LiCl can be 5 wt% to 100 wt% of a total amount of salts present in the solvent-soluble fraction, or less than or equal to 100 wt% and greater than or equal to 5 wt% and less than, equal to, or greater than 10 wt%, 15, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.9 wt%. Magnesium salts can be 0 wt% to 5 wt% of a total amount of salts present in the solvent-soluble fraction, or 0 wt% to 0.01 wt%, or less than or equal to 5 wt% and greater than or equal to 0 wt% and less than, equal to, or greater than 0.001 wt%, 0.01, 0.1, 0.5, 1, 1.5, 2, 2.5, 3, 3.5, 4, or 4.5 wt%. The method can further include recovering the LiCl from the solvent-soluble fraction as a product.

The method can further include using at least some of the water produced during the hydrolyzing and/or during the evaporating to perform the dissolution separation. The method can further include using at least some of the HCl produced during the hydrolyzing to perform the dissolution separation, such as by adding at least some of the HCl to the solvent used to perform the dissolution separation. In some aspects, the use of HCl in the dissolution separation is minimized or no HCl is used in the dissolution separation.

The dissolution separation can include adding solvent to the hydrolyzed mixture and dissolving the solvent-soluble fraction in the solvent while the solvent-insoluble fraction remains substantially insoluble in the solvent. Adding the solvent can include adding the least amount of the solvent needed to substantially completely dissolve the solvent-soluble fraction, such as to dissolve 90 wt% or more of the solvent-soluble fraction, or to dissolve equal to or greater than 91 wt%, 92, 93, 94, 95, 96, 97, 98, 99, 99.5, or 99.9 wt% of the solvent-soluble fraction. The dissolving of the solvent-soluble fraction in the solvent can be performed in any suitable way. For example, the dissolving of the solvent-soluble fraction in the solvent can include stirring, wet milling, ultrasonic milling, or a combination thereof. The dissolution separation can be performed at a temperature of 10 °C to 150 °C, or 20 °C to 100 °C, or less than or equal to 150 °C and greater than or equal to 10 °C and less than, equal to, or greater than 20 °C, 30, 40, 50, 60, 70, 80, 90, 100, 110, 120, 130, or 140 °C. The dissolution separation can be carried out at any suitable pressure, such as at atmospheric pressure. Separating the solvent-soluble fraction from the solvent-insoluble fraction can be performed in any suitable way. For example, separating the solvent-soluble fraction from the solvent-insoluble fraction can include filtration, gravity separation and decanting, centrifugation, or a combination thereof.

The solvent used to perform the dissolution separation can be any suitable one or more solvents. The solvent can include water, an alcohol (e.g., methanol or ethanol), or a combination thereof. In various aspects, the solvent can include added HCl. In other aspects, the solvent can be substantially free of added HCl. A weight ratio of the solvent added to the hydrolyzed mixture to lithium in the LiCl of the hydrolyzed mixture can be 0.1:1 to 1000:1, or 0.5:1 to 50:1, or less than or equal to 1000:1 and greater than or equal to 0.1:1 and less than, equal to, or greater than 750:1, 500:1, 400:1, 300:1, 200:1, 100:1, 80:1, 60:1, 50:1, 40:1, 20:1, 15:1, 10:1, 9:1, 8:1, 7:1, 6:1, 5:1, 4:1, 3:1, 2:1, 1:1, 0.8:1, 0.6:1, 0.5:1, 0.4:1, 0.3:1, or 0.2:1.

The solvent used to perform the dissolution separation can include water, wherein the solvent-soluble fraction is a water-soluble fraction, and wherein the solvent-insoluble fraction is a substantially water-insoluble fraction. A weight ratio of the solvent added to the hydrolyzed mixture to lithium in the LiCl of the hydrolyzed mixture of 1:1 to 10:1, or 2:1 to 5:1, or less than or equal to 10:1 and greater than or equal to 1:1 and less than, equal to, or greater than 9:1, 8:1, 7:1, 6:1, 5:1, 4:1, 3:1, 2:1, 1.8:1, 1.6:1, 1.5:1, 1.4:1, 1.3:1, 1.2:1, or 1.1:1.

The method can further include recovering the LiCl from the solvent-soluble fraction. Recovering the LiCl from the solvent-soluble fraction can include evaporation, membrane separation, ion exchange, chemical precipitation, or a combination thereof.

In various aspects, the method can include further processing steps to form the hydrolysis composition that includes MgCl₂ and LiCl. For example, the method can further include softening a brine composition. The brine composition includes MgCl₂ and LiCl. The softening includes treating the brine composition with a softening reagent to form a softened brine composition and one or more softening precipitates. The method can include separating the one or more softening precipitates from the softened brine composition. The method can also include partially evaporating the softened brine composition to form an evaporated softened brine, water, and one or more evaporation precipitates. The evaporated softened brine can be the hydrolysis composition that includes MgCl₂ and LiCl that is hydrolyzed to form the hydrolyzed mixture (e.g., a hydrolyzed brine). The Mg in the magnesium-containing product in the water-insoluble fraction from the hydrolyzed mixture can be 50 wt% to 100 wt% of the Mg in the MgCl₂ present in the brine composition, or 80 wt% to 100 wt%, or less than or equal to 100 wt% and greater than or equal to 50 wt% and less than, equal to, or greater than 55 wt%, 60, 65, 70, 75, 80, 82, 84, 86, 88, 90, 91, 92, 93, 94, 95, 96, 97, 98, 99, 99.5, or 99.9 wt% of the Mg in the MgCl₂ present in the brine composition. The LiCl in the solvent-soluble fraction from the hydrolyzed mixture can be 50 wt% to 100 wt% of the LiCl present in the brine composition, or 80 wt% to 100 wt%, or less than or equal to 100 wt% and greater than or equal to 50 wt% and less than, equal to, or greater than 55 wt%, 60, 65, 70, 75, 80, 82, 84, 86, 88, 90, 91, 92, 93, 94, 95, 96, 97, 98, 99, 99.5, or 99.9 wt% of the LiCl present in the brine composition.

The brine composition can be any suitable brine composition that includes MgCl₂ and LiCl. A molar ratio of magnesium to lithium in the brine composition can be 1:1000 to 1000:1, or 1:10 to 10:1, or less than or equal to 1:1000 and greater than or equal to 1000:1 and less than, equal to, or greater than 750:1, 500:1, 400:1, 300:1, 200:1, 100:1, 80:1, 60:1, 40:1, 20:1, 15:1, 10:1, 9:1, 8:1, 7:1, 6:1, 5:1, 4:1, 3:1, 2:1, 1:1, 1:2, 1:3, 1:4, 1:5, 1:6, 1:7, 1:8, 1:9, 1:10, 1:15, 1:20, 1:40, 1:60, 1:80, 1:100, 1:200, 1:300, 1:400, 1:500, or 1:750. A molar ratio of MgCl₂ to LiCl in the brine composition can be 1:1000 to 1000:1, or 1:10 to 10:1, or less than or equal to 1:1000 and greater than or equal to 1000:1 and less than, equal to, or greater than 750:1, 500:1, 400:1, 300:1, 200:1, 100:1, 80:1, 60:1, 40:1, 20:1, 15:1, 10:1, 9:1, 8:1, 7:1, 6:1, 5:1, 4:1, 3:1, 2:1, 1:1, 1:2, 1:3, 1:4, 1:5, 1:6, 1:7, 1:8, 1:9, 1:10, 1:15, 1:20, 1:40, 1:60, 1:80, 1:100, 1:200, 1:300, 1:400, 1:500, or 1:750. The brine composition can include a total concentration of metal chloride salts therein of 1 wt% to 50 wt%, 1 wt% to 80 wt%, or less than or equal to 80 wt% and greater than or equal to 1 wt% and less than, equal to, or greater than 2 wt%, 3, 4, 5, 6, 8, 10, 15, 20, 25, 30, 35, 40, 45, 50, 55, 60, 65, 70, or 75 wt%. The brine composition can be 50 wt% to 99 wt% water, or 20 wt% to 99 wt% water, or less than or equal to 99 wt% and greater than or equal to 20 wt% and less than, equal to, or greater than 25 wt%, 30, 35, 40, 45, 50, 55, 60, 65, 70, 75, 80, 82, 84, 86, 88, 90, 91, 92, 93, 94, 95, 96, 97, or 98 wt% water. The MgCl₂ and LiCl can together form any suitable proportion of the total amount of metal chloride salts in the brine composition, such as 1 wt% to 100 wt%, or 50 wt% to 100 wt%, or less than or equal to 100 wt% and greater than or equal to 1 wt% and less than, equal to, or greater than 2 wt%, 3, 4, 5, 10, 15, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.9 wt%. The brine composition can include produced water from petroleum extraction, produced water from CO₂ sequestration, water produced from an industrial process, a concentrate thereof, or a combination thereof. The brine can include waste piles or ponds left by prior extraction activity, such as prior Li-extraction activity.

The method can further include concentrating a starting material brine to form the brine composition, wherein the starting material brine includes produced water from petroleum extraction, produced water from CO₂ sequestration, water produced from an industrial process, or a combination thereof. The concentrating can include evaporating, wherein performing the evaporating includes using thermal treatment, distillation, an evaporator, a rotary evaporator, a jacketed tank evaporator, a natural or forced recirculation evaporator, a falling film evaporator, a rising film evaporator, a climbing and falling-film plate evaporator, a vacuum evaporator, or a combination thereof.

In addition to MgCl₂ and LiCl, the brine composition can further include a chloride salt of beryllium, calcium, strontium, barium, radium, sodium, potassium, rubidium, cesium, francium, a rare-earth element (REE) (e.g., La, Ce, Pr, Nd, Pm, Sm, Eu, Gd, Tb, Dy, Ho, Er, Tm, Yb, Lu, yttrium, or scandium), or any combination thereof. The brine composition can further include beryllium chloride, calcium chloride, strontium chloride, barium chloride, radium chloride, sodium chloride, potassium chloride, rubidium chloride, cesium chloride, francium chloride, or a combination thereof. The brine composition can include calcium chloride, sodium chloride, a chloride salt of a rare-earth element (REE), or a combination thereof. The materials listed in this paragraph can optionally be present in the hydrolysis composition, such as at the same concentration or at a lower concentration than the brine composition (e.g., the softening of the brine composition can remove or decrease the concentration of one or more of these materials). The metal chloride salts listed in this paragraph can form any suitable proportion of the total chloride salts in the brine composition, such as 1 wt% to 50 wt%, or less than or equal to 50 wt% and greater than or equal to 0.001 wt% and less than, equal to, or greater than 0.01 wt%, 0.1, 1, 2, 3, 4, 5, 10, 15, 20, 25, 30, 35, 40, or 45 wt%. The brine composition can be 50 wt% to 99 wt% water, or less than or equal to 99 wt% and greater than or equal to 50 wt% and less than, equal to, or greater than 55 wt%, 60, 65, 70, 75, 80, 85, 90, or 95 wt% water.

The softening reagent used to treat the brine composition to form the softened brine composition and one or more softening precipitates can include any one or more suitable materials. For example, the softening reagent can include NaHCO₃, Na₂CO₃, K₂CO₃, KHCO₃, or a combination thereof. The softening reagent can include Na₂CO₃. The one or more softening precipitates can include carbonate salts of Ca, Sr, Ba, or a combination thereof. The softening of the brine composition can include maintaining a temperature of the brine composition of 10 °C to 150 °C, or 20 °C to 60 °C, or less than or equal to 150 °C and greater than or equal to 10 °C and less than, equal to, or greater than 15 °C, 20, 25, 30, 35, 40, 45, 50, 55, 60, 70, 80, 90, 100, 110, 120, 130, or 140 °C. The softening of the brine composition can include maintaining a pressure of the brine composition of 0.1 MPa to 0.5 MPa, or 0.1 MPa to 0.2 MPa, or less than or equal to 0.5 MPa and greater than or equal to 0.1 MPa and less than, equal to, or greater than 0.15 MPa, 0.2, 0.25, 0.3, 0.35, 0.4, or 0.45 MPa. The softening can be performed at a pressure that exceeds, at the temperature used, the brine composition's saturation pressure for the one or more components that are desired to be removed via precipitation.

The at least partial evaporation of the softened brine composition can form an evaporated softened brine, water, and one or more evaporation precipitates. The one or more evaporation precipitates can include salts of Na, K, or a combination thereof, such as chloride salts of Na and/or K, carbonate salts of Na and/or K, bicarbonate salts of Na and/or K, or a combination thereof. The evaporating of the softened brine composition can include removing 1 wt% to 100 wt% of the water in the softened brine composition, or 50 wt% to 90 wt%, or less than or equal to 100 wt% and greater than or equal to 1 wt% and less than, equal to, or greater than 5 wt%, 10, 15, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.9 wt% of the water in the softened brine composition. The evaporating of the softened brine composition can include removing sufficient water to precipitate 5 wt% to 100 wt% of salts in the softened brine composition that do not include the MgCl₂ and LiCl, or 80 wt% to 99 wt%, or less than or equal to 100 wt% and greater than or equal to 5 wt% and less than, equal to, or greater than 10 wt%, 15, 20, 25, 30, 35, 40, 45, 50, 55, 60, 65, 70, 75, 80, 82, 84, 86, 88, 90, 91, 92, 93, 94, 95, 96, 97, 98, 99, 99.5, or 99.9 wt% of salts in the softened brine composition that do not include the MgCl₂ and LiCl. The method can further include recovering the water produced during the evaporation as a product.

The evaporating of the softened brine composition can be performed in any suitable way. For example, the evaporating of the softened brine composition can be performed using thermal treatment, distillation, an evaporator, a rotary evaporator, a jacketed tank evaporator, a natural or forced recirculation evaporator, a falling film evaporator, a rising film evaporator, a climbing and falling-film plate evaporator, a vacuum evaporator, or a combination thereof. The evaporating of the softened brine composition can include maintaining a temperature of the softened brine composition of 100 °C to 300 °C, or 125 °C to 200 °C, or less than or equal to 300 °C and greater than or equal to 100 °C and less than, equal to, or greater than 110 °C, 120, 130, 140, 150, 160, 170, 180, 190, 200, 210, 220, 230, 240, 250, 260, 270, 280, or 290 °C. The evaporating of the softened brine composition can include maintaining a pressure of the softened brine composition of 0.001 MPa to 1 MPa, or 0.01 MPa to 0.2 MPa, or less than or equal to 1 MPa and greater than or equal to 0.001 MPa and less than, equal to, or greater than 0.01 MPa, 0.1, 0.2, 0.4, 0.6, 0.8, 1, 1.2, 1.4, 1.6, 1.8, 2, 2.5, 3, 3.5, 4, 4.5, 5, 6, 7, 8, or 9 MPa.

FIG. 1 illustrates a processing scheme for extracting LiCl from a brine source including MgCl₂ and LiCl, in accordance with various aspects. The method illustrated in FIG. 1 includes softening the brine composition. The brine composition includes MgCl₂ and LiCl. The softening includes treating the brine composition with a softening reagent (e.g., Na₂CO₃) to form a softened brine composition and one or more softening precipitates. The softening precipitates can include carbonate salts of Ca, Sr, Ba, or a combination thereof. The method includes performing brine evaporation on the softened brine composition to evaporate water and to form evaporation precipitates such as Na and K salts. The method includes hydrolyzing the evaporated softened brine to form HCl, water, and a hydrolyzed brine. The method includes performing dissolution separation on the hydrolyzed brine including adding water and separating a substantially water-insoluble fraction including Mg(OH)₂ and/or MgO from a substantially water-soluble fraction including LiCl.

### Examples

Various aspects of the present invention can be better understood by reference to the following Examples which are offered by way of illustration. The present invention is not limited to the Examples given herein.

### Example 1. Hydrolysis of produced water including magnesium and lithium salts.

Table 1 summarizes example test data from a study of the hydrolysis treatment of mixed salts from a sample of oil and gas produced water. For these tests, a sample of produced water from the Bakken shale play in North Dakota was concentrated to precipitate the dissolved salts, which were then hydrolyzed and the hydrolysis products dissolved in water to produce soluble and insoluble fractions. The data show that virtually all of the Mg present in the original sample was hydrolyzed and was effectively isolated in the insoluble product fraction. On the other hand, Li either did not hydrolyze or did so to a negligible degree such that it was effectively isolated in the soluble product fraction.

**Table 1. Analysis results for hydrolyzed produced water salts (PWS).**

| | Starting PWS, µg/g of PWS | Hydrolyzed insoluble fraction, µg/g of PWS | Hydrolyzed soluble fraction, µg/g of PWS | Mass balance out/in, % |
|---|---|---|---|---|
| Li | 216 | 7.3 | 149 | 73 |
| Mg | 3770 | 3080 | 7.8 | 82 |

The terms and expressions that have been employed are used as terms of description and not of limitation, and there is no intention in the use of such terms and expressions of excluding any equivalents of the features shown and described or portions thereof, but it is recognized that various modifications are possible within the scope of the aspects of the present invention. Thus, it should be understood that although the present invention has been specifically disclosed by specific aspects and optional features, modification and variation of the concepts herein disclosed may be resorted to by those of ordinary skill in the art, and that such modifications and variations are considered to be within the scope of aspects of the present invention.

### Exemplary Aspects.

The following exemplary aspects are provided, the numbering of which is not to be construed as designating levels of importance:
Aspect 1 provides a method of separating lithium and magnesium salts, the method comprising:
   hydrolyzing a hydrolysis composition that comprises MgCl₂ and LiCl, the hydrolyzing comprising treating the hydrolysis composition with heat to form HCl, water (e.g., in the form of steam), and a hydrolyzed mixture comprising LiCl and MgO; and
   performing dissolution separation comprising separating a solvent-soluble fraction in the hydrolyzed mixture that comprises LiCl from a substantially solvent-insoluble fraction in the hydrolyzed mixture comprising a magnesium-containing product comprising Mg(OH)₂ and/or MgO.
Aspect 2 provides the method of Aspect 1, wherein a molar ratio of magnesium to lithium in the hydrolysis composition is 1:1000 to 1000:1.
Aspect 3 provides the method of any one of Aspects 1-2, wherein a molar ratio of MgCl₂ to LiCl in the hydrolysis composition is 1:1000 to 1000:1.
Aspect 4 provides the method of any one of Aspects 1-3, wherein a molar ratio of magnesium to lithium in the hydrolysis composition is 1:10 to 10:1.
Aspect 5 provides the method of any one of Aspects 1-4, wherein a molar ratio of MgCl₂ to LiCl in the hydrolysis composition is 1:10 to 10:1.
Aspect 6 provides the method of any one of Aspects 1-5, wherein the hydrolysis composition is 0 wt% to 99 wt% water.
Aspect 7 provides the method of any one of Aspects 1-6, wherein the hydrolysis composition is substantially dry and is 0 wt% to 5 wt% water.
Aspect 8 provides the method of any one of Aspects 1-7, wherein the hydrolysis composition is 5 wt% to 90 wt% water.
Aspect 9 provides the method of any one of Aspects 1-8, wherein the method comprises adding steam during the hydrolysis.
Aspect 10 provides the method of any one of Aspects 1-9, wherein the method is free of adding steam during the hydrolysis.
Aspect 11 provides the method of any one of Aspects 1-10, wherein steam is generated from water in the hydrolysis composition during the hydrolysis via the application of heat, wherein the hydrolysis composition comprises water that forms the steam.
Aspect 12 provides the method of any one of Aspects 1-11, further comprising recovering the HCl produced during the hydrolysis as a product.
Aspect 13 provides the method of any one of Aspects 1-12, wherein the hydrolysis comprises heating to a temperature of 250 °C to 650 °C.
Aspect 14 provides the method of any one of Aspects 1-13, wherein the hydrolysis comprises heating to a temperature of 450 °C to 550 °C.
Aspect 15 provides the method of any one of Aspects 1-14, wherein the hydrolysis comprises maintaining a pressure of 0.05 MPa to 10 MPa.
Aspect 16 provides the method of any one of Aspects 1-15, wherein the hydrolysis comprises maintaining a pressure of 0.1 MPa to 0.5 MPa.
Aspect 17 provides the method of any one of Aspects 1-16, comprising performing the hydrolysis for a duration of 1 second to 5 hours.
Aspect 18 provides the method of any one of Aspects 1-17, comprising performing the hydrolysis for a duration of 5 minutes to 1 hour.
Aspect 19 provides the method of any one of Aspects 1-18, wherein the magnesium-containing product comprises the MgO.
Aspect 20 provides the method of Aspect 19, wherein the magnesium-containing product further comprises the Mg(OH)₂.
Aspect 21 provides the method of any one of Aspects 19-20, wherein the magnesium-containing product is substantially free of Mg(OH)₂.
Aspect 22 provides the method of any one of Aspects 19-21, wherein the magnesium-containing product has a weight ratio of the MgO to the Mg(OH)₂ of 0.1:1 to 1:0.
Aspect 23 provides the method of any one of Aspects 19-22, wherein the magnesium-containing product has a weight ratio of the MgO to the Mg(OH)₂ of 1:1 to 1000:1.
Aspect 24 provides the method of any one of Aspects 1-23, further comprising recovering the magnesium-containing product from the solvent-insoluble fraction as a product.
Aspect 25 provides the method of any one of Aspects 1-24, wherein Mg in the magnesium-containing product in the solvent-insoluble fraction is 50 wt% to 100 wt% of the Mg in the MgCl₂ present in the hydrolysis composition.
Aspect 26 provides the method of any one of Aspects 1-25, wherein the Mg in the magnesium-containing product in the solvent-insoluble fraction is 80 wt% to 100 wt% of the Mg in the MgCl₂ present in the hydrolysis composition.
Aspect 27 provides the method of any one of Aspects 1-26, wherein lithium salts are 0 wt% to 5 wt% of a total amount of salts present in the solvent-insoluble fraction.
Aspect 28 provides the method of any one of Aspects 1-27, wherein lithium salts are 0 wt% to 0.01 wt% of a total amount of salts present in the solvent-insoluble fraction.
Aspect 29 provides the method of any one of Aspects 1-28, further comprising recovering the LiCl from the solvent-soluble fraction as a product.
Aspect 30 provides the method of any one of Aspects 1-29, wherein the LiCl in the solvent-soluble fraction is 50 wt% to 100 wt% of the LiCl present in the hydrolysis composition.
Aspect 31 provides the method of any one of Aspects 1-30, wherein the LiCl in the solvent-soluble fraction is 80 wt% to 100 wt% of the LiCl present in the hydrolysis composition.
Aspect 32 provides the method of any one of Aspects 1-31, wherein magnesium salts are 0 wt% to 5 wt% of a total amount of salts present in the solvent-soluble fraction.
Aspect 33 provides the method of any one of Aspects 1-32, wherein magnesium salts are 0 wt% to 0.01 wt% of a total amount of salts present in the solvent-soluble fraction.
Aspect 34 provides the method of any one of Aspects 1-33, further comprising using at least some of the water produced during the hydrolyzing and/or during the evaporating to perform the dissolution separation.
Aspect 35 provides the method of any one of Aspects 1-34, further comprising using at least some of the HCl produced during the hydrolyzing to perform the dissolution separation.
Aspect 36 provides the method of any one of Aspects 1-35, wherein the hydrolyzed mixture is a hydrolyzed brine.
Aspect 37 provides the method of any one of Aspects 1-36, wherein the dissolution separation comprises adding a solvent to the hydrolyzed mixture and dissolving the solvent-soluble fraction in the solvent while the solvent-insoluble fraction remains substantially insoluble in the solvent.
Aspect 38 provides the method of Aspect 37, wherein the solvent comprises water, an alcohol (e.g., methanol or ethanol), or a combination thereof.
Aspect 39 provides the method of Aspect 38, wherein a weight ratio of the solvent added to the hydrolyzed mixture to lithium in the LiCl of the hydrolyzed mixture is 0.1:1 to 1000:1.
Aspect 40 provides the method of any one of Aspects 38-39, wherein a weight ratio of the solvent added to the hydrolyzed mixture to lithium in the LiCl of the hydrolyzed mixture is 0.5:1 to 50:1.
Aspect 41 provides the method of any one of Aspects 37-40, wherein the solvent comprises water, wherein the solvent-soluble fraction is a water-soluble fraction, and wherein the solvent-insoluble fraction is a substantially water-insoluble fraction.
Aspect 42 provides the method of Aspect 41, wherein a weight ratio of the solvent added to the hydrolyzed mixture to lithium in the LiCl of the hydrolyzed mixture of 1:1 to 10:1.
Aspect 43 provides the method of any one of Aspects 41-42, wherein a weight ratio of the solvent added to the hydrolyzed mixture to lithium in the LiCl of the hydrolyzed mixture of 2:1 to 5:1.
Aspect 44 provides the method of any one of Aspects 37-43, wherein adding a solvent comprises adding the least amount of the solvent needed to substantially completely dissolve the solvent-soluble fraction.
Aspect 45 provides the method of any one of Aspects 37-44, wherein the dissolving of the solvent-soluble fraction in the solvent comprises stirring, wet milling, ultrasonic milling, or a combination thereof.
Aspect 46 provides the method of any one of Aspects 1-45, wherein the dissolution separation is performed at a temperature of 10 °C to 150 °C.
Aspect 47 provides the method of any one of Aspects 1-46, wherein the dissolution separation is performed at a temperature of 20 °C to 100 °C.
Aspect 48 provides the method of any one of Aspects 1-47, wherein the dissolution separation is carried out at atmospheric pressure.
Aspect 49 provides the method of any one of Aspects 1-48, wherein separating the solvent-soluble fraction from the solvent-insoluble fraction comprises filtration, gravity separation and decanting, centrifugation, or a combination thereof.
Aspect 50 provides the method of any one of Aspects 1-49, further comprising recovering the LiCl from the solvent-soluble fraction.
Aspect 51 provides the method of Aspect 50, wherein recovering the LiCl from the solvent-soluble fraction comprises evaporation, membrane separation, ion exchange, chemical precipitation, or a combination thereof.
Aspect 52 provides the method of any one of Aspects 1-51, further comprising:
   softening a brine composition, the brine composition comprising MgCl₂ and LiCl, the softening comprising treating the brine composition with a softening reagent to form a softened brine composition and one or more softening precipitates; and
   partially evaporating the softened brine composition to form an evaporated softened brine, water, and one or more evaporation precipitates, wherein the evaporated softened brine is the hydrolysis composition;
Aspect 53 provides the method of Aspect 52, wherein the brine composition comprises produced water from petroleum extraction, produced water from CO₂ sequestration, water produced from an industrial process, a concentrate thereof, or a combination thereof.
Aspect 54 provides the method of any one of Aspects 52-53, wherein the method further comprises concentrating a starting material brine to form the brine composition, wherein the starting material brine comprises produced water from petroleum extraction, produced water from CO₂ sequestration, water produced from an industrial process, or a combination thereof.
Aspect 55 provides the method of Aspect 54, wherein the concentrating comprises evaporating, wherein performing the evaporating comprises using thermal treatment, distillation, an evaporator, a rotary evaporator, a jacketed tank evaporator, a natural or forced recirculation evaporator, a falling film evaporator, a rising film evaporator, a climbing and falling-film plate evaporator, a vacuum evaporator, or a combination thereof.
Aspect 56 provides the method of any one of Aspects 52-55, wherein the brine composition further comprises a chloride salt of beryllium, calcium, strontium, barium, radium, sodium, potassium, rubidium, cesium, francium, a rare-earth element (REE) (e.g., La, Ce, Pr, Nd, Pm, Sm, Eu, Gd, Tb, Dy, Ho, Er, Tm, Yb, Lu, yttrium, or scandium), or any combination thereof.
Aspect 57 provides the method of any one of Aspects 52-56, wherein the brine composition further comprises beryllium chloride, calcium chloride, strontium chloride, barium chloride, radium chloride, sodium chloride, potassium chloride, rubidium chloride, cesium chloride, francium chloride, or a combination thereof.
Aspect 58 provides the method of any one of Aspects 52-57, wherein the brine composition further comprises calcium chloride, sodium chloride, a chloride salt of a rare-earth element (REE), or a combination thereof.
Aspect 59 provides the method of any one of Aspects 52-58, wherein the brine composition has a total concentration of metal chloride salts therein of 1 wt% to 50 wt%.
Aspect 60 provides the method of any one of Aspects 52-59, wherein the brine composition is 50 wt% to 99 wt% water.
Aspect 61 provides the method of any one of Aspects 52-60, wherein the softening reagent comprises NaHCO₃, Na₂CO₃, K₂CO₃, KHCO₃, or a combination thereof.
Aspect 62 provides the method of any one of Aspects 52-61, wherein the softening reagent comprises Na₂CO₃.
Aspect 63 provides the method of any one of Aspects 52-62, wherein the one or more softening precipitates comprise carbonate salts of Ca, Sr, Ba, or a combination thereof.
Aspect 64 provides the method of any one of Aspects 52-63, wherein a molar ratio of magnesium to lithium in the brine composition is 1:1000 to 1000:1.
Aspect 65 provides the method of any one of Aspects 52-64, wherein a molar ratio of magnesium to lithium in the brine composition is 1:10 to 10:1.
Aspect 66 provides the method of any one of Aspects 52-65, wherein the softening of the brine composition comprises maintaining a temperature of 10 °C to 150 °C.
Aspect 67 provides the method of any one of Aspects 52-66, wherein the softening of the brine composition comprises maintaining a temperature of 20 °C to 60 °C.
Aspect 68 provides the method of any one of Aspects 52-67, wherein the softening of the brine composition comprises maintaining a pressure of 0.1 MPa to 0.5 MPa.
Aspect 69 provides the method of any one of Aspects 52-68, wherein the softening of the brine composition comprises maintaining a pressure of 0.1 MPa to 0.2 MPa.
Aspect 70 provides the method of any one of Aspects 52-69, wherein the one or more evaporation precipitates comprise salts of Na, K, or a combination thereof.
Aspect 71 provides the method of any one of Aspects 52-70, further comprising recovering the water produced during the evaporation as a product.
Aspect 72 provides the method of any one of Aspects 52-71, wherein the evaporating of the softened brine composition comprises removing 1 wt% to 100 wt% of the water in the softened brine composition.
Aspect 73 provides the method of any one of Aspects 52-72, wherein the evaporating of the softened brine composition comprises removing 50 wt% to 90 wt% of the water in the softened brine composition.
Aspect 74 provides the method of any one of Aspects 52-73, wherein the evaporating of the softened brine composition comprises removing sufficient water to precipitate 5 wt% to 100 wt% of salts in the softened brine composition that do not comprise the MgCl₂ and LiCl.
Aspect 75 provides the method of any one of Aspects 52-74, wherein the evaporating of the softened brine composition comprises removing sufficient water to precipitate 80 wt% to 99 wt% of the salts in the softened brine composition that do not comprise the MgCl₂ and LiCl.
Aspect 76 provides the method of any one of Aspects 52-75, wherein the evaporating of the softened brine composition is performed using thermal treatment, distillation, an evaporator, a rotary evaporator, a jacketed tank evaporator, a natural or forced recirculation evaporator, a falling film evaporator, a rising film evaporator, a climbing and falling-film plate evaporator, a vacuum evaporator, or a combination thereof.
Aspect 77 provides the method of any one of Aspects 52-76, wherein the evaporating of the softened brine composition comprises maintaining a temperature of 100 °C to 300 °C.
Aspect 78 provides the method of any one of Aspects 52-77, wherein the evaporating of the softened brine composition comprises maintaining a temperature of 125 °C to 200 °C.
Aspect 79 provides the method of any one of Aspects 52-78, wherein the evaporating of the softened brine composition comprises a pressure of 0.001 MPa to 1 MPa.
Aspect 80 provides the method of any one of Aspects 52-79, wherein the evaporating of the softened brine composition comprises a pressure of 0.01 MPa to 0.2 MPa.
Aspect 81 provides a method of separating lithium and magnesium salts, the method comprising:
   softening the brine composition, the brine composition comprising MgCl₂ and LiCl, the softening comprising treating the brine composition with a softening reagent to form a softened brine composition and one or more softening precipitates;
   partially evaporating the softened brine composition to form an evaporated softened brine, water, and one or more evaporation precipitates;
   hydrolyzing the evaporated softened brine, the hydrolyzing comprising treating the evaporated softened brine with heat to form HCl, water, and hydrolyzed brine comprising LiCl and MgO; and
   performing dissolution separation comprising separating a solvent-soluble fraction in the hydrolyzed brine that comprises LiCl from a substantially solvent-insoluble fraction in the hydrolyzed brine comprising a magnesium-containing product comprising Mg(OH)₂ and/or MgO.
Aspect 82 provides the method of any one or any combination of Aspects 1-81 optionally configured such that all elements or options recited are available to use or select from. One, non-limiting embodiment of the present invention will now be described by way of reference to the following clauses:
   1. A method of separating lithium and magnesium salts, the method comprising:
      hydrolyzing a hydrolysis composition that comprises MgCl₂ and LiCl, the hydrolyzing comprising treating the hydrolysis composition with heat to form HCl, water, and a hydrolyzed mixture comprising LiCl and MgO; and
      performing dissolution separation comprising separating a solvent-soluble fraction in the hydrolyzed mixture that comprises LiCl from a substantially solvent-insoluble fraction in the hydrolyzed mixture comprising a magnesium-containing product comprising Mg(OH)₂ and/or MgO.
   2. The method of clause 1, wherein a molar ratio of MgCl₂ to LiCl in the hydrolysis composition is 1:10 to 10:1.
   3. The method of clause 1, wherein
      the hydrolysis composition is substantially dry and is 0 wt% to 5 wt% water, and wherein the method comprises adding steam during the hydrolysis, or
      the hydrolysis composition is 5 wt% to 90 wt% water.
   4. The method of clause 1, wherein the hydrolysis comprises maintaining a temperature of 250 °C to 650 °C and a pressure of 0.05 MPa to 10 MPa.
   5. The method of clause 1, wherein the magnesium-containing product has a weight ratio of the MgO to the Mg(OH)₂ of 0.1:1 to 1:0.
   6. The method of clause 1, wherein Mg in the magnesium-containing product in the solvent-insoluble fraction is 50 wt% to 100 wt% of the Mg in the MgCl₂ present in the hydrolysis composition, and wherein lithium salts are 0 wt% to 5 wt% of a total amount of salts present in the solvent-insoluble fraction.
   7. The method of clause 1, wherein the LiCl in the solvent-soluble fraction is 50 wt% to 100 wt% of the LiCl present in the hydrolysis composition, and wherein magnesium salts are 0 wt% to 5 wt% of a total amount of salts present in the solvent-soluble fraction.
   8. The method of clause 1, further comprising
      using at least some of the water produced during the hydrolyzing and/or during the evaporating to perform the dissolution separation.
   9. The method of clause 1, wherein the dissolution separation comprises adding a solvent to the hydrolyzed mixture and dissolving the solvent-soluble fraction in the solvent while the solvent-insoluble fraction remains substantially insoluble in the solvent, and wherein the solvent comprises water, an alcohol, or a combination thereof.
   10. The method of clause 1, wherein the dissolution separation is performed at a temperature of 10 °C to 150 °C.
   11. The method of clause 1, wherein separating the solvent-soluble fraction from the solvent-insoluble fraction comprises filtration, gravity separation and decanting, centrifugation, or a combination thereof.
   12. The method of clause 1, further comprising:
      softening a brine composition, the brine composition comprising MgCl₂ and LiCl, the softening comprising treating the brine composition with a softening reagent to form a softened brine composition and one or more softening precipitates; and
      partially evaporating the softened brine composition to form an evaporated softened brine, water, and one or more evaporation precipitates, wherein the evaporated softened brine is the hydrolysis composition.
   13. The method of clause 12, wherein
      the brine composition comprises produced water from petroleum extraction, produced water from CO₂ sequestration, water produced from an industrial process, a concentrate thereof, or a combination thereof, or
      the method further comprises concentrating a starting material brine to form the brine composition, wherein the starting material brine comprises produced water from petroleum extraction, produced water from CO₂ sequestration, water produced from an industrial process, or a combination thereof.
   14. The method of clause 12, wherein the brine composition further comprises a chloride salt of beryllium, calcium, strontium, barium, radium, sodium, potassium, rubidium, cesium, francium, a rare-earth element (REE) (e.g., La, Ce, Pr, Nd, Pm, Sm, Eu, Gd, Tb, Dy, Ho, Er, Tm, Yb, Lu, yttrium, or scandium), or any combination thereof.
   15. The method of clause 12, wherein the softening reagent comprises NaHCO₃, Na₂CO₃, K₂CO₃, KHCO₃, or a combination thereof, and wherein the one or more softening precipitates comprise carbonate salts of Ca, Sr, Ba, or a combination thereof.
   16. The method of clause 12, wherein the softening of the brine composition comprises maintaining a temperature of 10 °C to 150 °C and a pressure of 0.1 MPa to 0.5 MPa.
   17. The method of clause 12, wherein the one or more evaporation precipitates comprise salts of Na, K, or a combination thereof.
   18. The method of clause 12, wherein the evaporating of the softened brine composition comprises removing sufficient water to precipitate 5 wt% to 100 wt% of salts in the softened brine composition that do not comprise the MgCl₂ and LiCl.
   19. The method of clause 12, wherein the evaporating of the softened brine composition comprises maintaining a temperature of 100 °C to 300 °C and a pressure of 0.001 MPa to 1 MPa.
   20. A method of separating lithium and magnesium salts, the method comprising:
      softening the brine composition, the brine composition comprising MgCl₂ and LiCl, the softening comprising treating the brine composition with a softening reagent to form a softened brine composition and one or more softening precipitates;
      partially evaporating the softened brine composition to form an evaporated softened brine, water, and one or more evaporation precipitates;
      hydrolyzing the evaporated softened brine, the hydrolyzing comprising treating the evaporated softened brine with heat to form HCl, water, and hydrolyzed brine comprising LiCl and MgO; and
      performing dissolution separation comprising separating a solvent-soluble fraction in the hydrolyzed brine that comprises LiCl from a substantially water-insoluble fraction in the hydrolyzed brine comprising a magnesium-containing product comprising Mg(OH)₂ and/or MgO.

## Claims

1. A method of separating lithium and magnesium salts, the method comprising:
hydrolyzing a hydrolysis composition that comprises MgCl₂ and LiCl, the hydrolyzing comprising treating the hydrolysis composition with heat to form HCl, water, and a hydrolyzed mixture comprising LiCl and MgO; and
performing dissolution separation comprising separating a solvent-soluble fraction in the hydrolyzed mixture that comprises LiCl from a substantially solvent-insoluble fraction in the hydrolyzed mixture comprising a magnesium-containing product comprising Mg(OH)₂ and/or MgO.

2. The method of claim 1, wherein a molar ratio of MgCl₂ to LiCl in the hydrolysis composition is 1:10 to 10:1.

3. The method of claim 1, wherein
the hydrolysis composition is substantially dry and is 0 wt% to 5 wt% water, and wherein the method comprises adding steam during the hydrolysis, or
the hydrolysis composition is 5 wt% to 90 wt% water.

4. The method of claim 1, wherein the hydrolysis comprises maintaining a temperature of 250 °C to 650 °C and a pressure of 0.05 MPa to 10 MPa.

5. The method of claim 1, wherein Mg in the magnesium-containing product in the solvent-insoluble fraction is 50 wt% to 100 wt% of the Mg in the MgCl₂ present in the hydrolysis composition, and wherein lithium salts are 0 wt% to 5 wt% of a total amount of salts present in the solvent-insoluble fraction.

6. The method of claim 1, wherein the LiCl in the solvent-soluble fraction is 50 wt% to 100 wt% of the LiCl present in the hydrolysis composition, and wherein magnesium salts are 0 wt% to 5 wt% of a total amount of salts present in the solvent-soluble fraction.

7. The method of claim 1, wherein the dissolution separation comprises adding a solvent to the hydrolyzed mixture and dissolving the solvent-soluble fraction in the solvent while the solvent-insoluble fraction remains substantially insoluble in the solvent, and wherein the solvent comprises water, an alcohol, or a combination thereof, and wherein the dissolution separation is performed at a temperature of 10 °C to 150 °C.

8. The method of claim 1, wherein separating the solvent-soluble fraction from the solvent-insoluble fraction comprises filtration, gravity separation and decanting, centrifugation, or a combination thereof.

9. The method of claim 1, further comprising:
softening a brine composition, the brine composition comprising MgCl₂ and LiCl, the softening comprising treating the brine composition with a softening reagent to form a softened brine composition and one or more softening precipitates; and
partially evaporating the softened brine composition to form an evaporated softened brine, water, and one or more evaporation precipitates, wherein the evaporated softened brine is the hydrolysis composition.

10. The method of claim 9, wherein
the brine composition comprises produced water from petroleum extraction, produced water from CO₂ sequestration, water produced from an industrial process, a concentrate thereof, or a combination thereof, or
the method further comprises concentrating a starting material brine to form the brine composition, wherein the starting material brine comprises produced water from petroleum extraction, produced water from CO₂ sequestration, water produced from an industrial process, or a combination thereof.

11. The method of claim 9, wherein the brine composition further comprises a chloride salt of beryllium, calcium, strontium, barium, radium, sodium, potassium, rubidium, cesium, francium, a rare-earth element (REE) (e.g., La, Ce, Pr, Nd, Pm, Sm, Eu, Gd, Tb, Dy, Ho, Er, Tm, Yb, Lu, yttrium, or scandium), or any combination thereof.

12. The method of claim 9, wherein the softening reagent comprises NaHCO₃, Na₂CO₃, K₂CO₃, KHCO₃, or a combination thereof, and wherein the one or more softening precipitates comprise carbonate salts of Ca, Sr, Ba, or a combination thereof.

13. The method of claim 9, wherein the softening of the brine composition comprises maintaining a temperature of 10 °C to 150 °C and a pressure of 0.1 MPa to 0.5 MPa, and wherein the evaporating of the softened brine composition comprises maintaining a temperature of 100 °C to 300 °C and a pressure of 0.001 MPa to 1 MPa..

14. The method of claim 9, wherein the one or more evaporation precipitates comprise salts of Na, K, or a combination thereof.

15. The method of claim 9, wherein the evaporating of the softened brine composition comprises removing sufficient water to precipitate 5 wt% to 100 wt% of salts in the softened brine composition that do not comprise the MgCl₂ and LiCl.
